# EUROPEAN PATENT SPECIFICATION

(11) **EP 4 078 062 B1**
(45) Date of publication and mention of the grant of the patent: **15.11.2023**
(21) Application number: 20823935.0
(22) Date of filing: 24.11.2020
(51) Int. Cl.: F28D 20/02, F01P 11/20, F01P 3/20, B60K 11/02, B60K 1/00, F28D 21/00

(54) **VEHICLE THERMAL MANAGEMENT ASSEMBLY**
THERMISCHE VERWALTUNGSANORDNUNG FÜR FAHRZEUGE
ENSEMBLE DE GESTION THERMIQUE DE VÉHICULE

(30) Priority: 19.12.2019 IT 201900024826
(43) Date of publication of application: 26.10.2022
(73) Proprietor: Industrie Saleri Italo S.P.A., 25065 Lumezzane, Brescia (IT)
(72) Inventor: PEDERSOLI, Marco, 25065 Lumezzane, Brescia (IT); SURACE, Alfonso, 25065 Lumezzane, Brescia (IT); DALLERA, Luca, 25065 Lumezzane, Brescia (IT)
(74) Representative: Gamba, Alessandro
(86) International application number: PCT/IB2020/061070
(87) International publication number: WO 2021/123972

(56) References cited:
- EP-A1- 3 381 723
- WO-A2-2011/088968
- DE-A1-102011 105 366
- DE-A1-102013 225 582
- DE-C1- 19 912 139

## Description

The present invention relates to a thermal management assembly of a thermal management system of a vehicle. Additionally, the present invention also relates to the thermal management system of a vehicle, which comprises said thermal management assembly. Furthermore, the present invention also relates to a vehicle that comprises said system and said thermal management assembly.

In other words, the present invention relates to the automotive field, and in detail, to the thermal management system of a vehicle. In particular, the term "vehicle" relates to any means of transport without any limitation as to type or size, i.e., a motor vehicle or a semi-articulated vehicle.

The need to manage the temperature of the operating groups of the vehicle to bring them to and/or keep them in the best possible operating conditions (by cooling and/or heating them) is known from the prior art. In particular, "operating group" hereinafter means a specific component or group of components for carrying out a given operation necessary for the motion of the vehicle. Therefore, for example, "operating group" means the engine group, for example an internal combustion engine or an electric motor.

Additionally, with specific reference to the present invention, "operating groups" comprise an "electronic group" which identifies a "battery pack" comprised in the vehicle.

With particular reference to the electronic groups, and in particular to the battery packs, the need is particularly felt to bring them to optimal operating conditions as soon as required.

That is, it was noted how it is of fundamental importance to bring the electronic group to an optimal operating temperature as soon as possible, for example after the ignition. Moreover, the more rigid temperatures are in the ambient in which the vehicle operates, the more such a problem is felt. Thermal management assemblies are known in the state of the art from documents DE102011105366A1, DE102013225582A1, EP3381723A1, WO2011/088968A2, DE19912139C1. The assemblies described therein provide few possibilities of flow regulation, thus they lack of flexibility in use.

Therefore, it is the object of the present invention to provide a new thermal management assembly by means of which such a problem is solved.

Such an object is achieved by a thermal management assembly as claimed in claim 1.

The claims dependent on the aforesaid claim show preferred variants implying further advantageous aspects.

Further features and advantages of the invention will become apparent from the description provided below of preferred exemplary embodiments thereof, given by way of non-limiting example, with reference to the accompanying drawings, in which:

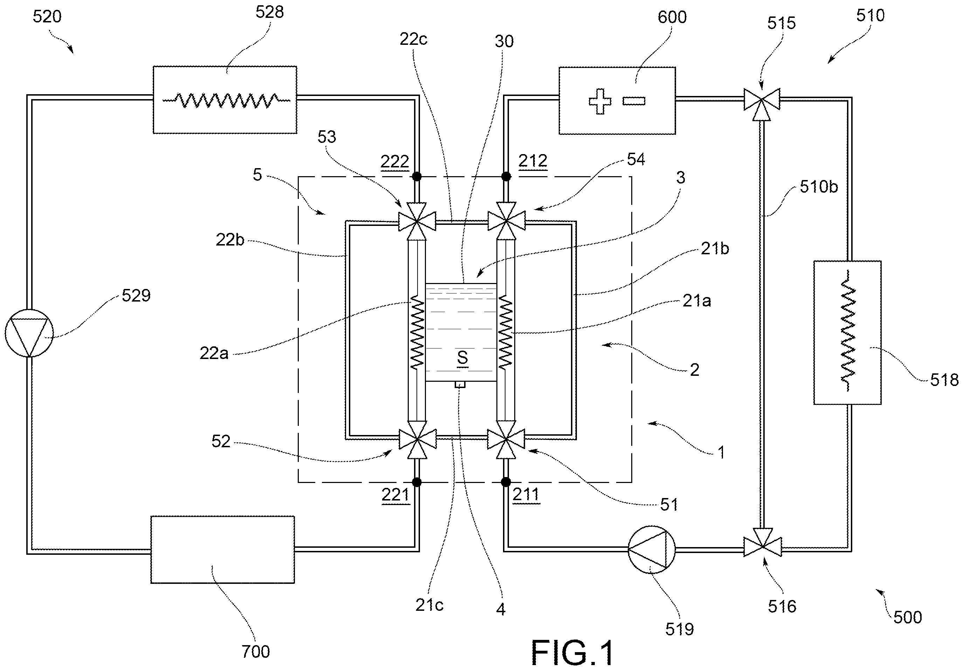

- Figure 1 shows a diagrammatic view of the thermal management system fluidically connected to some vehicle operating groups, comprising a thermal management assembly according to a preferred embodiment of the present invention;
- Figure 2 depicts the diagrammatic view of the thermal management system in Figure 1, in an activation phase of the thermal management assembly;

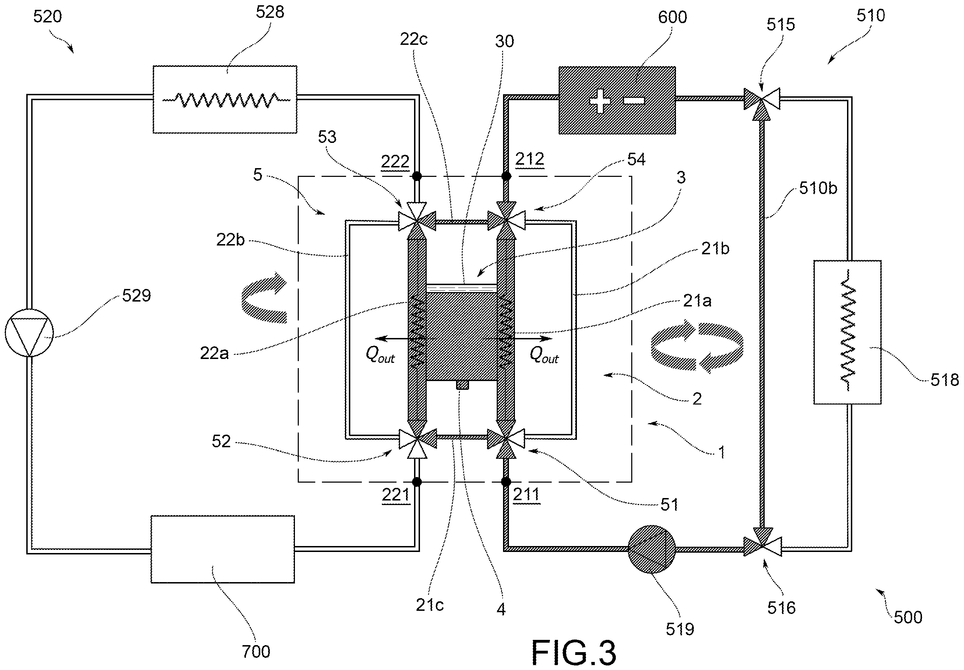

- Figure 3 shows the diagrammatic view of the thermal management system in Figure 1, in a first configuration, or in a heating configuration, of the thermal management assembly;

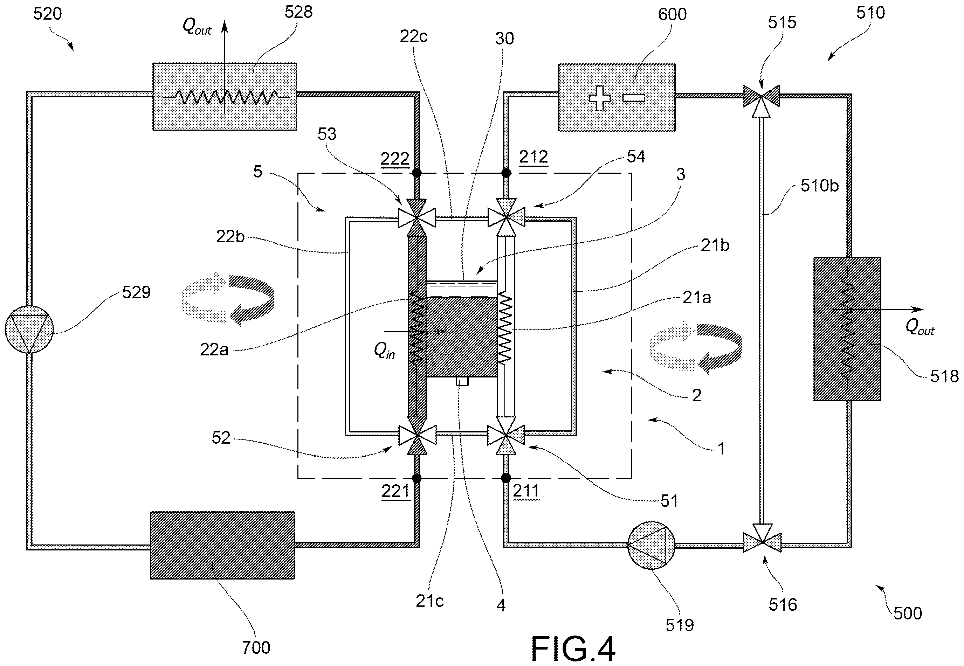

- Figure 4 shows the diagrammatic view of the thermal management system in Figure 1, in a second configuration, or in a regenerating configuration, of the thermal management assembly.

With reference to the accompanying drawings, reference numeral 1 indicates a thermal management assembly of a thermal management system 500 of a vehicle, according to the present invention.

The present invention also relates to the thermal management system 500, which comprises the thermal management assembly 1.

In particular, the thermal management system 500 of the present invention, and/or on which the thermal management assembly 1 of the present invention is mountable, comprises a first fluidic circuit 510 in which a first amount of fluid flows and a second fluidic circuit 520 in which a second amount of fluid flows.

According to a preferred embodiment, a first fluid flows in said first fluidic circuit 510, while a second fluid, which is distinct from the first one, flows in said second fluidic circuit 520.

According to other embodiments, the same liquid instead flows in the first fluidic circuit 510 and in the second fluidic circuit 520.

According to a preferred embodiment, the first fluidic circuit 510 is fluidically connectable to an electronic group 600, for example a battery pack, of the vehicle. That is, the liquid flowing in the first fluidic circuit 510 is suitable to adjust the temperature of the electronic group 600.

According to a preferred embodiment, the second fluidic circuit 520 is fluidically connectable to an operating group 700, for example an engine group, of the vehicle. That is, the liquid flowing in the second fluidic circuit 520 is suitable to adjust the temperature of the operating group 700.

Preferably, both the first fluidic circuit 510 and the second fluidic circuit 520 comprise specific ducts suitable to allow the fluid connection with the respective operating groups.

According to a preferred embodiment, the first fluidic circuit 510 comprises a first pump group 519 suitable to move the first amount of fluid in the first circuit, i.e., in the ducts thereof.

According to a preferred embodiment, the second fluidic circuit 520 comprises a second pump group 529 suitable to move the second amount of fluid in the second circuit, i.e., in the ducts thereof.

According to the present invention, the thermal management assembly 1 is fluidically connectable to the first fluidic circuit 510 and to the second fluidic circuit 520.

As thoroughly described below, the thermal management assembly 1 is suitable to manage the temperature of the liquid flowing in the first fluidic circuit 510, and therefore the temperature of the electronic group 600.

According to the present invention, the thermal management assembly 1 comprises a main body 2 fluidically connected to said circuits. That is, the thermal management assembly 1 is connectable to the ducts of said circuits. In further other words, the main body 2 is a fluid collector.

According to a preferred embodiment, the main body 2 comprises a first pair of mouths connected to the first fluidic circuit and a second pair of mouths connected to the second fluidic circuit.

Indeed, the main body 2 comprises a first inlet mouth 211 and a first outlet mouth 212 fluidically connected to the first fluidic circuit 510.

Moreover, the main body 2 comprises a second inlet mouth 221 and a second outlet mouth 222 fluidically connected to the second fluidic circuit 520.

According to the present invention, the main body 2 comprises a plurality of fluid connection sections extending between the aforesaid inlet and outlet mouths. Therefore, the liquid flowing in the first fluidic circuit 510 and the liquid flowing in the second fluidic circuit 520 are suitable to flow in said fluid connection sections.

According to the present invention, the thermal adjustment assembly 1 comprises a command member 5 housed in the main body 2, which is configurable in a plurality of configurations as described below.

In particular as hereinafter thoroughly described, the command member 5 is suitable to allow the passage of liquid in one fluid section rather than in the other, thus identifying specific fluidic paths in the main body 2 for the liquid or for the liquids.

That is, by virtue of the command member 5, one or more fluidic paths in which the first amount of fluid and the second amount of fluid flow are identified in the main body 2, as needed.

According to the present invention, the thermal adjustment assembly 1 comprises a thermal adjustment member 3 comprising a container 30 and a predetermined amount of phase change material S housed in said container 30.

Said thermal adjustment member 3 is at least partially housed in the main body 2 or is located on the main body 2.

Preferably, said container 30 is sealingly closed, containing the phase change material S therein, avoiding possible external contaminations thereof.

According to a preferred embodiment, the phase change material S is a liquid-based substance containing a super-saturated liquid.

Preferably, the phase change material S consists of a super-saturated liquid in its entirety.

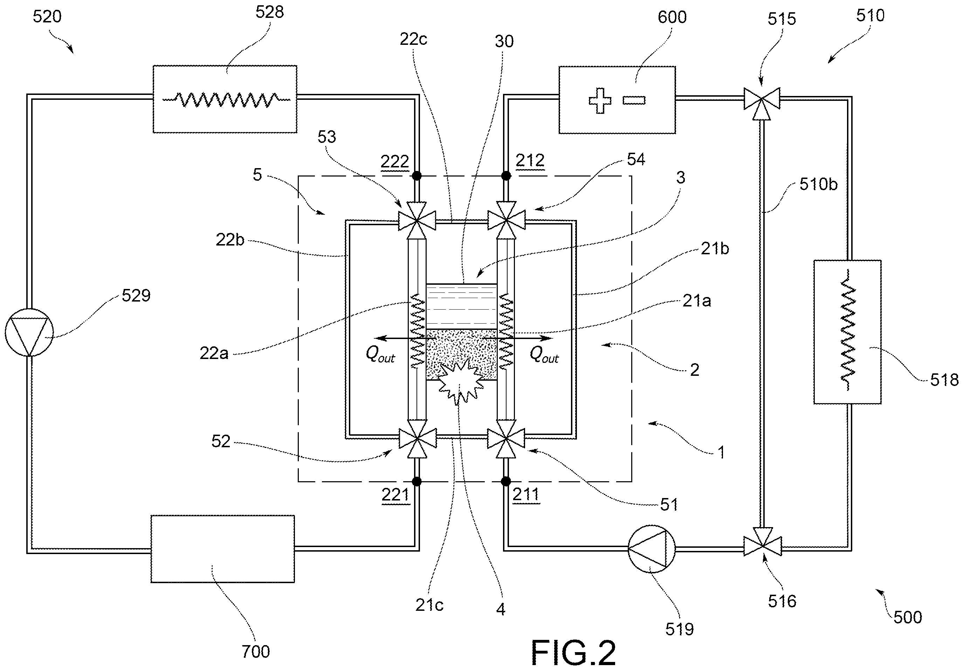

According to the present invention, the phase change material S in a liquid state "is activatable" so that it is subjected to a phase change which brings it to the solid state. The phase change material S generates heat (it releases thermal energy) during said phase change. The heat generated is therefore suitable to heat the environment surrounding container 30, thus transferring heat. That is, once the phase change material S is activated, it is subjected to an exothermic crystallization reaction, transforming it from liquid to solid. Therefore, phase in the present disclosure is referred to as the "heating phase". Preferably, such a phase is depicted in Figure 2b.

According to the present invention, the phase change material S in a solid state broughtable back to the liquid state. In other words, the phase change material S is suitable to be subjected to a new phase change, which, from solid, brings it back to the liquid state; that is, the phase change material S is "recharged" or is "regenerated". Specifically, such an operation can be carried out by heating the phase change material S in the solid state. That is, the crystalline form into which the phase change material S was transformed during the above-described "heating phase" is dissolved. Therefore, phase in the present disclosure is referred to as the "regenerating phase". Preferably, such a phase is depicted in Figure 2c.

According to the present invention, the activation that allows the start of the "heating phase" is obtained by a mechanical action.

In particular, the thermal adjustment assembly 1 of the present invention comprises a mechanical ignition member 4 suitable to carry out a vibratory mechanical action on the thermal adjustment member 3. Such a vibratory mechanical action is suitable to trigger an exothermic crystallization reaction of the phase change material S, transforming it from liquid to solid.

According to the embodiment, the mechanical ignition member 4 is mounted on container 3 or is integrally embedded within container 3.

Preferably, the mechanical ignition member 4 is substantially a switch, which when turned ON, results in a vibratory action on the phase change material S, which activates the crystallization.

According to a preferred embodiment, certain fluidic sections comprised in the main body 2 are located in a proximal region to the thermal adjustment member 3, i.e., proximal to container 30. Therefore, the fluid flowing in such fluidic sections is preferably subjected to a heat exchange with said adjustment member 3.

Preferably, the main body 2 comprises a first main fluid section 21a and a second main fluid section 22a located in a proximal area to the thermal adjustment member 3. The amount of fluid flowing in the first main fluid section 21a and the amount of fluid flowing in the second main fluid section 22a are subjected to heat exchange operations with the thermal adjustment member 3.

According to a preferred embodiment, the first main fluid section 21a and the second main fluid section 22a are mutually fluidically distinct.

According to a variant, the first main fluid section 21a and the second main fluid section 22a are fluidically connectable by means of auxiliary fluidic sections 21c, 22c, in which the flow of fluid through the first main fluid section 21a and/or through the second main fluid section 22a and/or through the auxiliary fluidic sections 21c, 22c is controlled by the command member 5.

According to a preferred embodiment, certain fluidic sections comprised in the main body 2 are located in a region distal from the thermal adjustment member 3, i.e., far from container 30. Therefore, the fluid flowing in such fluidic sections is not preferably subjected to a heat exchange with said adjustment member 3.

Preferably, the main body 2 comprises a first fluid bypass section 21b located in a distal position from the thermal adjustment member 3, which communicates the first inlet mouth 211 with the first outlet mouth 212.

Moreover, the main body 2 preferably comprises a second fluid bypass section 22b located in a distal position from the thermal adjustment member 3, which communicates the second inlet mouth 221 with the second outlet mouth 222.

According to such preferred embodiments, the fluid flowing in the first fluid bypass section 21b and in the second fluid bypass section 22b are not subjected to significant variations in temperature.

According to the present invention, the command member 5 is housed in the main body 2 and is configurable in a first configuration (or heating configuration) during the modification of the physical state of the phase change material S from liquid to solid. In particular, a fluidic path is defined in such a first configuration of the command member 5 in the fluid connection sections, in which the circulating fluid of the first circuit 510 flows from the first inlet mouth 211 to the first outlet mouth 212 close to the thermal adjustment member 3.

That is, in the first configuration, the command member 5 delimits such a fluidic path so that the fluid circulating in the first circuit 510 flows from the first inlet mouth 211 to the first outlet mouth 212 through at least one main fluid section 21a, 22a. Therefore, such a fluid is preferably subjected to heat exchange with the thermal adjustment member 3, which generates heat during the transition thereof from liquid to solid, thus increasing the temperature thereof.

According to an example being not in accordance with the invention, in the first configuration, the command member 5 is suitable to prevent the flow of fluid in the second fluidic circuit 520.

According to the invention, in the first configuration, the fluid circulating in the second circuit 520 flows from the second inlet mouth 221 to the second outlet mouth 222 through the second fluid bypass section 22b, thus being distal from the thermal adjustment member 3.

According to the present invention, the command member 5 is configurable in a second configuration (or regenerating configuration) during the modification of the physical state of the phase change material S from solid to liquid. In particular, a fluidic path is defined in such a second configuration of the command member 5 in the fluid connection sections, in which the circulating fluid of the second circuit flows from the second inlet mouth 221 to the second outlet mouth 222 close to the thermal adjustment member 3.

That is, in the second configuration, the command member 5 delimits such a fluidic path so that the fluid circulating in the second circuit 520 flows from the second inlet mouth 221 to the second outlet mouth 222 through at least one main fluid section 21a, 22a. Therefore, such a fluid is preferably subjected to heat exchange with the thermal adjustment member 3 which is contrary to that of the above-described phase: it is the flowing fluid to be at a greater temperature than the temperature of the adjustment member 3, and in particular, some of the phase change material S is in a solid crystalline state, which is subjected to heating and therefore is brought back to a liquid state.

According to a preferred embodiment, in the second configuration, the command member 5 is suitable to prevent the flow of fluid in the first fluidic circuit 510.

According to a preferred variant, in the second configuration, the fluid circulating in the first circuit 510 flows from the first inlet mouth 211 to the first outlet mouth 212 through the first fluid bypass section 21b, thus being distal from the thermal adjustment member 3.

According to a preferred embodiment therefore, the command member 5 commands the flow of the first amount of fluid and/or the flow of the second amount of fluid flowing in both the first main fluid section 21a and the second main fluid section 22a.

In other words, in the first configuration, the command member 5 commands the flow of the first amount of fluid and/or of the second amount of fluid flowing in both the first main fluid section 21a and the second main fluid section 22a, thus increasing the heat exchange region with the adjustment member 3.

According to a preferred embodiment, the command member 5 comprises a command group operatively connected to the adjustment member 3. Therefore, the command group is preferably suitable to operate as a function of the temperature of the adjustment member 3 by controlling specific configurations of the adjustment member 3.

According to a preferred embodiment, like that shown by way of example in the accompanying drawings, the command member 5 comprises a plurality of valve command elements 51, 52, 53, 54 housed in respective fluidic sections of the main body 2, the positioning of which adjusts the passage of fluid in a respective section.

Preferably, the valve command elements 51, 52, 53, 54 are located to correspond to fluidic junctions of different fluidic sections comprised in the main body 2.

According to a preferred embodiment, the valve command elements 51, 52, 53, 54 substantially are valves positionable in respective angular positions such as to allow, prevent or direct the flow of fluid in the fluidic sections.

Preferably, the command group is suitable to adjust each valve command element 51, 52, 53, 54 in a respective position so as to define the aforesaid fluidic paths.

As mentioned, the present invention also relates to the thermal management system 500 of a vehicle.

Preferably, the first fluidic circuit 510 comprises a first heat exchange device 518, for example a radiator, suitable to have a heat exchange with the first amount of fluid flowing in the first circuit. Preferably, the second fluidic circuit 520 comprises a second heat exchange device 528, e.g., a radiator, suitable to have a heat exchange with the second amount of fluid flowing in the second circuit.

As shown by way of example in the accompanying drawings, also the fluidic circuitscomprise specific valve elements 515, 516 and specific bypass ducts 510b by means of which specific components such as the first heat exchange device 518 arebypassable.

According to a preferred embodiment, said valve elements 515, 516 are specifically configurable to correspond to the first configuration of the thermal adjustment assembly 1 so as to facilitate to the greatest extent possible the heat exchange of the first amount of fluid with the electronic group 600, i.e., the battery pack, which is heated as quickly as possible.

According to a preferred embodiment, the thermal adjustment assembly 1 is operatively connectable to the control unit of the vehicle so as to control the first configuration (the heating configuration) upon the ignition of the vehicle.

As mentioned, the present invention also relates to a vehicle comprising an electronic group 600, for example a battery pack, an operating group 700, for example a engine group, and a thermal management system 500 having the above-described features.

Innovatively, the thermal management assembly, the thermal management system of a vehicle comprising such a management assembly, and the vehicle comprising said thermal management system broadly achieve the purpose of the present invention, solving the problems which arose in the solutions typical of the prior art.

Indeed, the thermal management assembly advantageously has highly simplified heat exchange methods with the thermal adjustment member, in both the first heating configuration and the second regenerating configuration.

Moreover, the phase change material advantageously is safely housed in the container, avoiding risks of losses or leaks thereof.

The phase change material advantageously is activable simply and abruptly with a mechanical operation.

Advantageously, the thermal management assembly is reliable and safe, thus suitable to be housed in a vehicle and to be subjected to a large number of work cycles.

Advantageously, the command member is simple to implement.

Advantageously, the thermal management assembly is connectable to the control unit of the vehicle and controllable therefrom.

It is apparent that, in order to meet contingent needs, those skilled in the art may make changes to the thermal management assembly and to the thermal management system, as well as to the vehicle, all contained within the scope of protection as defined by the following claims.

## Claims

1. A thermal management assembly (1) of a thermal management system (500) of a vehicle, which comprises a first fluidic circuit (510), in which a first amount of fluid flows, being fluidically connectable to an electronic group (600), for example a battery pack, of the vehicle, and a second fluidic circuit (520), in which a second amount of fluid flows, being fluidically connectable to an operating group (700), for example an engine group, of the vehicle;
wherein the thermal management assembly (1) comprises:
- a main body (2) comprising a first inlet mouth (211) and a first outlet mouth (212) fluidically connected to the first fluidic circuit (510) and a second inlet mouth (221) and a second outlet mouth (222) fluidically connected to the second fluidic circuit (520), wherein the main body (2) comprises a plurality of fluid connection sections extending between the aforesaid inlet and outlet mouths;
- a thermal adjustment member (3) comprising a container (30) and a predetermined amount of phase change material (S) housed within said container (30), wherein said thermal adjustment member (3) is at least partially housed in the main body (2) or is located on the main body (2) ;
- a mechanical ignition member (4) suitable to carry out a vibratory mechanical action on the thermal adjustment member (3) suitable to trigger an exothermic crystallization reaction of the phase change material (S) transforming it from liquid to solid, producing heat;
- a command member (5) configurable in:
i) a first configuration, during the modification of the physical state of the phase change material (S) from liquid to solid, in which a fluidic path is defined in the fluid connection sections, wherein the circulating fluid of the first circuit (510) flows from the first inlet mouth (211) to the first outlet mouth (212) close to the thermal adjustment member (3);
ii) a second configuration, during the modification of the physical state of the phase change material (S) from solid to liquid, in which a fluidic path is defined in the fluid connection sections, wherein the circulating fluid of the second circuit flows from the second inlet mouth (221) to the second outlet mouth (222) proximal to the thermal adjustment member (3);
wherein the main body (2) comprises a first main fluid section (21a) and a second main fluid section (22a) located in a proximal region to the thermal adjustment member (3) so that the amount of fluid flowing in the first main fluid section (21a) and the amount of fluid flowing in the second main fluid section (22a) are subjected to heat exchange operations with the thermal adjustment member (3);
wherein the thermal management assembly (1) is **characterized in that** the command member (5) is housed in the main body (2);
and **in that** the main body (2) comprises a first fluid bypass section (21b) located in a distal position from the thermal adjustment member (3), which sets in communication the first inlet mouth (211) with the first outlet mouth (212), wherein the command member (5), configured in the second configuration, allows the flow of fluid in said first fluid bypass section (21b), being suitable to allow a first amount of fluid to flow in the first fluidic circuit (510);
and **in that** the main body (2) comprises a second fluid bypass section (22b) located in a distal position from the thermal adjustment member (3), which sets in communication the second inlet mouth (221) with the second outlet mouth (222), wherein the command member (5), configured in the first configuration, allows the flow of fluid in said second fluid bypass section (22b), being suitable to allow a second amount of fluid to flow in the second fluidic circuit (520).

2. Thermal management assembly (1) according to claim 1, wherein the phase change material (S) is a liquid-based substance containing a super-saturated liquid.

3. Thermal management assembly (1) according to any one of the preceding claims, wherein in the first configuration, the command member (5) is suitable for preventing the flow of fluid into the second fluidic circuit (520).

4. Thermal management assembly (1) according to any one of the previous claims, wherein the first main fluid section (21a) and the second main fluid section (22a) are mutually fluidically distinct.

5. Thermal management assembly (1) according to any one of the previous claims, wherein the first main fluid section (21a) and the second main fluid section (22a) are fluidically connectable by means of auxiliary fluidic sections (21c, 22c), wherein the flow of fluid through the first main fluid section (21a) and/or through the second main fluid section (22a) and/or through the auxiliary fluidic sections (21c, 22c) is commanded by the command member (5).

6. Thermal management assembly (1) according to claim 4, wherein the command member (5) commands the flow of the first amount of fluid and/or the flow of the second amount of fluid flowing in both the first main fluid section (21a) and the second main fluid section (22a).

7. Thermal management assembly (1) according to any one of the preceding claims, wherein the command member (5) comprises a command group operatively connected to the adjustment member (3) so that the command group is suitable for operating as a function of the temperature of the adjustment member (3) by commanding specific configurations of the adjustment member (3).

8. Thermal management assembly (1) according to any one of the preceding claims, wherein the command member (5) comprises a plurality of valve command elements (51, 52, 53, 54) housed in respective fluidic sections of the main body (2), the positioning of which adjusts the passage of fluid in a respective section.

9. Thermal management assembly (1) according to claim 8, wherein said valve command elements (51, 52, 53, 54) are positioned to correspond with fluidic junctions of different fluidic sections comprised in the main body (2) .

10. A thermal management system (500) of a vehicle, comprising:
- a first fluidic circuit (510) in which a first amount of fluid flows, being fluidically connectable to an electronic group (600), for example a battery pack, of the vehicle;
- a second fluidic circuit (520), in which a second amount of fluid flows, being fluidically connectable to an operating group (700), for example a engine group, of the vehicle;
- a thermal management assembly (1) fluidically connected to said first fluidic circuit (510) and to said second fluidic circuit (520), according to any one of the preceding claims.

11. Thermal management system (500) of a vehicle according to claim 10, wherein the first fluidic circuit (510) comprises a first pump group (519) suitable to move the first amount of fluid in the first fluidic circuit, and wherein the second fluidic circuit (520) comprises a second pump group (529) suitable to move the second amount of fluid in the second fluidic circuit.

12. Thermal management system (500) of a vehicle according to any one of claims 10 and 11, wherein the first fluidic circuit (510) comprises a first heat exchange device (518) suitable to have a heat exchange with the first amount of fluid flowing in the first fluidic circuit and/or the second fluidic circuit (520) comprises a second heat exchange device (528) suitable to have a heat exchange with the second amount of fluid flowing in the second fluidic circuit.

13. A vehicle comprising an electronic group (600), e.g., a battery pack, an operating group (700), e.g., an engine group, and a thermal management system (500) according to claims 10 to 12.

## Patentansprüche

1. Thermische Verwaltungsanordnung (1) eines thermischen Verwaltungssystems (500) eines Fahrzeugs, welches einen ersten Fluidkreislauf (510), in welchem eine erste Fluidmenge strömt und welcher fluidisch mit einer elektronischen Gruppe (600), beispielsweise einem Batteriepack, des Fahrzeugs verbindbar ist, und einen zweiten Fluidkreislauf (520) umfasst, in welchem eine zweite Fluidmenge strömt und welcher fluidisch mit einer Betriebsgruppe (700), beispielsweise einer Motorengruppe, des Fahrzeugs verbindbar ist;
wobei die thermische Verwaltungsanordnung (1) umfasst:
- einen Hauptkörper (2), welcher einen ersten Einlassmund (211) sowie einen ersten Auslassmund (212), welche fluidisch mit dem ersten Fluidkreislauf (510) verbunden sind, und einen zweiten Einlassmund (221) sowie einen zweiten Auslassmund (222) umfasst, welche fluidisch mit dem zweiten Fluidkreislauf (520) verbunden sind, wobei der Hauptkörper (2) eine Mehrzahl von Fluidverbindungsabschnitten umfasst, welche sich zwischen den zuvor genannten Einlass- und Auslassmündern erstrecken;
- ein thermisches Anpassungselement (3), welches einen Behälter (30) und eine vorbestimmte Menge eines Phasenwechselmaterials (S) umfasst, welches in dem Behälter (30) aufgenommen ist, wobei das thermische Anpassungselement (3) wenigstens teilweise in dem Hauptkörper (2) aufgenommen ist oder an dem Hauptkörper (2) angeordnet ist;
- ein mechanisches Zündelement (4), welches dazu geeignet ist, an dem thermischen Anpassungselement (3) eine schwingende mechanische Aktion auszuführen, welche dazu geeignet ist, eine exotherme Kristallisationsreaktion des Phasenwechselmaterials (S) auszulösen, welche es von einem flüssigen in einen festen Zustand überführt und Wärme erzeugt;
- ein Befehlselement (5), welches einrichtbar ist, in:
i) eine erste Konfiguration, während der Modifikation des physikalischen Zustands des Phasenwechselmaterials (S) von flüssig zu fest, in welcher ein Fluidweg in den Fluidverbindungsabschnitten definiert ist, wobei das zirkulierende Fluid des ersten Kreislaufs (510) von dem ersten Einlassmund (211) zu dem ersten Auslassmund (212) strömt, welcher nahe an dem thermischen Anpassungselement (3) ist;
ii) eine zweite Konfiguration, während der Modifikation des physikalischen Zustands des Phasenwechselmaterials (S) von fest zu flüssig, in welcher ein Fluidweg in den Fluidverbindungsabschnitten definiert ist, wobei das zirkulierende Fluid des zweiten Kreislaufs von dem zweiten Einlassmund (221) zu dem zweiten Auslassmund (222) strömt, welcher proximal zu dem thermischen Anpassungselement (3) ist;
wobei der Hauptkörper (2) einen ersten Hauptfluidabschnitt (21a) und einen zweiten Hauptfluidabschnitt (22a) umfasst, welche in einem proximalen Bereich zu dem thermischen Anpassungselement (3) sind, sodass die Fluidmenge, welche in dem ersten Hauptfluidabschnitt (21a) strömt, und die Fluidmenge, welche in dem zweiten Hauptfluidabschnitt (22a) strömt, Wärmeaustauschvorgängen bei dem thermischen Anpassungselement (3) ausgesetzt sind;
wobei die thermische Verwaltungsanordnung (1) **dadurch gekennzeichnet ist, dass** das Befehlselement (5) in dem Hauptkörper (2) aufgenommen ist;
und dadurch, dass der Hauptkörper (2) einen ersten Fluidumgehungsabschnitt (21b) umfasst, welcher in einer distalen Position von dem thermischen Anpassungselement (3) angeordnet ist und welcher den ersten Einlassmund (211) in Verbindung mit dem ersten Auslassmund (212) setzt, wobei das Befehlselement (5), in der zweiten Konfiguration eingerichtet, das Strömen von Fluid in dem ersten Fluidumgehungsabschnitt (21b) erlaubt, welcher dazu geeignet ist, es einer ersten Fluidmenge zu erlauben, in dem ersten Fluidkreislauf (510) zu strömen;
und dadurch, dass der Hauptkörper (2) einen zweiten Fluidumgehungsabschnitt (22b) umfasst, welcher in einer distalen Position von dem thermischen Anpassungselement (3) angeordnet ist und welcher den zweiten Einlassmund (221) in Verbindung mit dem zweiten Auslassmund (222) setzt, wobei das Befehlselement (5), in der ersten Konfiguration eingerichtet, das Strömen von Fluid in dem zweiten Fluidumgehungsabschnitt (22b) erlaubt, welcher dazu geeignet ist, es einer zweiten Fluidmenge zu erlauben, in dem zweiten Fluidkreislauf (520) zu strömen.

2. Thermische Verwaltungsanordnung (1) nach Anspruch 1, wobei das Phasenwechselmaterial (S) eine Flüssigkeit-basierte Substanz ist, welche eine übersättigte Flüssigkeit enthält.

3. Thermische Verwaltungsanordnung (1) nach einem der vorhergehenden Ansprüche, wobei, in der ersten Konfiguration, das Befehlselement (5) dazu geeignet ist, das Strömen von Fluid in den zweiten Fluidkreislauf (520) zu verhindern.

4. Thermische Verwaltungsanordnung (1) nach einem der vorhergehenden Ansprüche, wobei sich der erste Hauptfluidabschnitt (21a) und der zweite Hauptfluidabschnitt (22a) fluidisch voneinander unterscheiden.

5. Thermische Verwaltungsanordnung (1) nach einem der vorhergehenden Ansprüche, wobei der erste Hauptfluidabschnitt (21a) und der zweite Hauptfluidabschnitt (22a) mittels Hilfsfluidabschnitten (21c, 22c) fluidisch verbindbar sind, wobei das Strömen von Fluid durch den ersten Hauptfluidabschnitt (21a) und/oder durch den zweiten Hauptfluidabschnitt (22a) und/oder durch die Hilfsfluidabschnitte (21c, 22c) durch das Befehlselement (5) befohlen wird.

6. Thermische Verwaltungsanordnung (1) nach Anspruch 4, wobei das Befehlselement (5) das Strömen der ersten Fluidmenge und/oder das Strömen der zweiten Fluidmenge befehlt, welche sowohl in dem ersten Hauptfluidabschnitt (21a) als auch in dem zweiten Hauptfluidabschnitt (22a) strömt/strömen.

7. Thermische Verwaltungsanordnung (1) nach einem der vorhergehenden Ansprüche, wobei das Befehlselement (5) eine Befehlsgruppe umfasst, welche betriebsgemäß mit dem Anpassungselement (3) verbunden ist, sodass die Befehlsgruppe dazu geeignet ist, durch ein Befehlen spezifischer Konfigurationen des Anpassungselements (3) als eine Funktion der Temperatur des Anpassungselements (3) tätig zu sein.

8. Thermische Verwaltungsanordnung (1) nach einem der vorhergehenden Ansprüche, wobei das Befehlselement (5) eine Mehrzahl von Ventil-Befehlelementen (51, 52, 53, 54) umfasst, welche in jeweiligen Fluidabschnitten des Hauptkörpers (2) aufgenommen sind, wobei deren Positionierung den Durchfluss von Fluid in einem jeweiligen Abschnitt anpasst.

9. Thermische Verwaltungsanordnung (1) nach Anspruch 8, wobei die Ventil-Befehlelemente (51, 52, 53, 54) positioniert sind, um Fluidanschlüssen unterschiedlicher Fluidabschnitte zu entsprechen, welche in dem Hauptkörper (2) umfasst sind.

10. Thermisches Verwaltungssystem (500) eines Fahrzeugs, umfassend:
- einen ersten Fluidkreislauf (510), in welchem eine erste Fluidmenge strömt und welcher fluidisch mit einer elektronischen Gruppe (600), beispielsweise einem Batteriepack, des Fahrzeugs verbindbar ist;
- einen zweiten Fluidkreislauf (520), in welchem eine zweite Fluidmenge strömt und welcher fluidisch mit einer Betriebsgruppe (700), beispielsweise einer Motorengruppe, des Fahrzeugs verbindbar ist;
- eine thermische Verwaltungsanordnung (1), welche fluidisch verbunden ist mit dem ersten Fluidkreislauf (510) und dem zweiten Fluidkreislauf (520), nach einem der vorhergehenden Ansprüche.

11. Thermisches Verwaltungssystem (500) eines Fahrzeugs nach Anspruch 10, wobei der erste Fluidkreislauf (510) eine ersten Pumpengruppe (519) umfasst, welche dazu geeignet ist, die erste Fluidmenge in dem ersten Fluidkreislauf zu bewegen, und wobei der zweite Fluidkreislauf (520) eine zweite Pumpengruppe (529) umfasst, welche dazu geeignet ist, die zweite Fluidmenge in dem zweiten Fluidkreislauf zu bewegen.

12. Thermisches Verwaltungssystem (500) eines Fahrzeugs nach einem der Ansprüche 10 und 11, wobei der erste Fluidkreislauf (510) eine erste Wärmeaustauschvorrichtung (518) umfasst, welche dazu geeignet ist, einen Wärmeaustausch mit der ersten Fluidmenge zu haben, welche in dem ersten Fluidkreislauf strömt, und/oder der zweite Fluidkreislauf (520) eine zweite Wärmeaustauschvorrichtung (528) umfasst, welche dazu geeignet ist, einen Wärmeaustausch mit der zweiten Fluidmenge zu haben, welche in dem zweiten Fluidkreislauf strömt.

13. Fahrzeug, umfassend eine elektronische Gruppe (600), beispielsweise einen Batteriepack, eine Betriebsgruppe (700), beispielsweise eine Motorengruppe, und ein thermisches Verwaltungssystem (500) nach den Ansprüchen 10 bis 12.

## Revendications

1. Ensemble de gestion thermique (1) d'un système de gestion thermique (500) d'un véhicule, qui comprend un premier circuit fluidique (510), dans lequel s'écoule une première quantité de fluide, pouvant être connecté de manière fluidique à un groupe électronique (600), par exemple un bloc-batterie, du véhicule, et un deuxième circuit fluidique (520), dans lequel s'écoule une deuxième quantité de fluide, pouvant être connecté de manière fluidique à un groupe de fonctionnement (700), par exemple un groupe moteur, du véhicule ;
dans lequel l'ensemble de gestion thermique (1) comprend :
- un corps principal (2) comprenant une première bouche d'entrée (211) et une première bouche de sortie (212) connectées de manière fluidique au premier circuit fluidique (510) et une deuxième bouche d'entrée (221) et une deuxième bouche de sortie (222) connectées de manière fluidique au deuxième circuit fluidique (520), dans lequel le corps principal (2) comprend une pluralité de sections de connexion fluidique s'étendant entre les bouches d'entrée et de sortie susmentionnées ;
- un organe de réglage thermique (3) comprenant un récipient (30) et une quantité prédéterminée de matériau à changement de phase (S) logé à l'intérieur dudit récipient (30), dans lequel ledit organe de réglage thermique (3) est au moins partiellement logé dans le corps principal (2) ou est situé sur le corps principal (2) ;
- un organe d'allumage mécanique (4) adapté pour effectuer une action mécanique vibratoire sur l'organe de réglage thermique (3) adapté pour déclencher une réaction de cristallisation exothermique du matériau à changement de phase (S) le transformant de liquide en solide, produisant de la chaleur ;
- un organe de commande (5) pouvant être configuré dans :
i) une première configuration, lors de la modification de l'état physique du matériau à changement de phase (S) de liquide en solide, dans laquelle un chemin fluidique est défini dans les sections de connexion fluidique, dans lequel le fluide en circulation du premier circuit (510) s'écoule depuis la première bouche d'entrée (211) vers la première bouche de sortie (212) à proximité de l'organe de réglage thermique (3) ;
ii) une deuxième configuration, lors de la modification de l'état physique du matériau à changement de phase (S) de solide en liquide, dans laquelle un chemin fluidique est défini dans les sections de connexion fluidique, dans laquelle le fluide en circulation du deuxième circuit s'écoule de la deuxième bouche d'entrée (221) à la deuxième bouche de sortie (222) à proximité de l'organe de réglage thermique (3) ;
dans lequel le corps principal (2) comprend une première section de fluide principale (21a) et une deuxième section de fluide principale (22a) situées dans une région proximale de l'organe de réglage thermique (3) de sorte que la quantité de fluide s'écoulant dans la première section de fluide principale (21a) et la quantité de fluide s'écoulant dans la deuxième section de fluide principale (22a) soient soumises à des opérations d'échange thermique avec l'organe de réglage thermique (3) ;
dans lequel l'ensemble de gestion thermique (1) est **caractérisé en ce que** l'organe de commande (5) est logé dans le corps principal (2) ;
et **en ce que** le corps principal (2) comprend une première section de dérivation de fluide (21b) située dans une position distale par rapport à l'organe de réglage thermique (3), qui met en communication la première bouche d'entrée (211) avec la première bouche de sortie (212), dans lequel l'organe de commande (5), configuré dans la deuxième configuration, permet l'écoulement de fluide dans ladite première section de dérivation de fluide (21b), étant adapté pour permettre à une première quantité de fluide de s'écouler dans le premier circuit fluidique (510) ;
et **en ce que** le corps principal (2) comprend une deuxième section de dérivation de fluide (22b) située dans une position distale par rapport à l'organe de réglage thermique (3), qui met en communication la deuxième bouche d'entrée (221) avec la deuxième bouche de sortie (222), dans lequel l'organe de commande (5), configuré dans la première configuration, permet l'écoulement de fluide dans ladite deuxième section de dérivation de fluide (22b), étant adapté pour permettre à une deuxième quantité de fluide de s'écouler dans le deuxième circuit fluidique (520).

2. Ensemble de gestion thermique (1) selon la revendication 1, dans lequel le matériau à changement de phase (S) est une substance à base de liquide contenant un liquide sursaturé.

3. Ensemble de gestion thermique (1) selon l'une quelconque des revendications précédentes, dans lequel dans la première configuration, l'organe de commande (5) est adapté pour empêcher l'écoulement de fluide dans le deuxième circuit fluidique (520).

4. Ensemble de gestion thermique (1) selon l'une quelconque des revendications précédentes, dans lequel la première section de fluide principale (21a) et la deuxième section de fluide principale (22a) sont mutuellement distinctes sur le plan fluidique.

5. Ensemble de gestion thermique (1) selon l'une quelconque des revendications précédentes, dans lequel la première section de fluide principale (21a) et la deuxième section de fluide principale (22a) peuvent être connectées de manière fluidique au moyen de sections fluidiques auxiliaires (21c, 22c), dans lequel l'écoulement de fluide à travers la première section fluidique principale (21a) et/ou à travers la deuxième section de fluide principale (22a) et/ou à travers les sections fluidiques auxiliaires (21c, 22c) est commandé par l'organe de commande (5).

6. Ensemble de gestion thermique (1) selon la revendication 4, dans lequel l'organe de commande (5) commande l'écoulement de la première quantité de fluide et/ou l'écoulement de la deuxième quantité de fluide s'écoulant à la fois dans la première section de fluide principale (21a) et la deuxième section de fluide principale (22a).

7. Ensemble de gestion thermique (1) selon l'une quelconque des revendications précédentes, dans lequel l'organe de commande (5) comprend un groupe de commande fonctionnellement connecté à l'organe de réglage (3) de sorte que le groupe de commande soit apte à fonctionner en fonction de la température de l'organe de réglage (3) en commandant des configurations spécifiques de l'organe de réglage (3).

8. Ensemble de gestion thermique (1) selon l'une quelconque des revendications précédentes, dans lequel l'organe de commande (5) comprend une pluralité d'éléments de commande de vanne (51, 52, 53, 54) logés dans des sections fluidiques respectives du corps principal (2), dont le positionnement permet de régler le passage du fluide dans une section respective.

9. Ensemble de gestion thermique (1) selon la revendication 8, dans lequel lesdits éléments de commande de vanne (51, 52, 53, 54) sont positionnés pour correspondre aux jonctions fluidiques des différentes sections fluidiques comprises dans le corps principal (2).

10. Système de gestion thermique (500) d'un véhicule, comprenant :
- un premier circuit fluidique (510) dans lequel s'écoule une première quantité de fluide, pouvant être connecté de manière fluidique à un groupe électronique (600), par exemple un bloc batterie, du véhicule ;
- un deuxième circuit fluidique (520), dans lequel s'écoule une deuxième quantité de fluide, pouvant être connecté de manière fluidique à un groupe de fonctionnement (700), par exemple un groupe moteur, du véhicule ;
- un ensemble de gestion thermique (1) connecté de manière fluidique audit premier circuit fluidique (510) et audit deuxième circuit fluidique (520), selon l'une quelconque des revendications précédentes.

11. Système de gestion thermique (500) d'un véhicule selon la revendication 10, dans lequel le premier circuit fluidique (510) comprend un premier groupe de pompes (519) adapté pour déplacer la première quantité de fluide dans le premier circuit fluidique, et dans lequel le deuxième circuit fluidique (520) comprend un deuxième groupe de pompes (529) adapté pour déplacer la deuxième quantité de fluide dans le deuxième circuit fluidique.

12. Système de gestion thermique (500) d'un véhicule selon l'une quelconque des revendications 10 et 11, dans lequel le premier circuit fluidique (510) comprend un premier dispositif d'échange thermique (518) adapté pour réaliser un échange thermique avec la première quantité de fluide s'écoulant dans le premier circuit fluidique et/ou le deuxième circuit fluidique (520) comprend un deuxième dispositif d'échange thermique (528) adapté pour avoir un échange thermique avec la deuxième quantité de fluide s'écoulant dans le deuxième circuit fluidique.

13. Véhicule comprenant un groupe électronique (600), par exemple un bloc-batterie, un groupe de fonctionnement (700), par exemple un groupe moteur, et un système de gestion thermique (500) selon les revendications 10 à 12.
